# EUROPEAN PATENT SPECIFICATION

(11) **EP 2 247 947 B1**
(45) Date of publication and mention of the grant of the patent: **11.07.2018**
(21) Application number: 09715449.6
(22) Date of filing: 18.02.2009
(51) Int. Cl.: G01N 27/83

(54) **DEVICE FOR THE MONITORING OF MULTICABLE SYSTEMS**
VORRICHTUNG ZUR ÜBERWACHUNG VON MEHRKABELSYSTEMEM
DISPOSITIF DE SURVEILLANCE DE SYSTÈMES MULTICÂBLES

(30) Priority: 28.02.2008 IT TO20080143
(43) Date of publication of application: 10.11.2010
(73) Proprietor: AMC Instruments S.R.L., 10121 Torino (IT)
(72) Inventor: CANOVA, Aldo, 10121 Torino (IT); VUSINI, Bruno, 10121 Torino (IT); FICILI, Francesco, 10121 Torino (IT); GRUOSSO, Giambattista, 10121 Torino (IT)
(74) Representative: Marchitelli, Mauro
(86) International application number: PCT/IB2009/050656
(87) International publication number: WO 2009/107033

(56) References cited:
- EP-A- 1 676 806
- WO-A-2007/012685
- GB-A- 2 206 969
- US-A- 4 427 940
- US-A- 4 538 107
- University Of Reading: "Wire Rope Non-Destructive Testing - Survey of Instrument Manufacturers", , 31 December 2000 (2000-12-31), XP55062679, Retrieved from the Internet: URL:http://www.hse.gov.uk/research/otopdf/ 2000/oto00064.pdf [retrieved on 2013-05-13]

## Description

The present invention relates to the field of monitoring of cables, in particular metal cables, in multicable systems for plants or systems for moving objects.

Metal cables find a wide use in systems for moving objects, such as, for example, lifting systems (hoists, elevators, etc.) and systems for skiing purposes, i.e., in systems characterized by difficult conditions of operation both from the environmental standpoint and from the standpoint of mechanical stress. The considerable attention to the subject of safety and the continuous need to meet to increasingly stringent technical requirements make the problem of monitoring of metal cables, which represent one of the weak links in the chain of safety made up of these transport systems, particularly felt.

Historically, monitoring of metal cables was carried out by visual inspection. This type of inspection required a considerable expenditure of time and set various problems of practical nature. In order to simplify inspection, there were subsequently developed specifically conceived devices for the monitoring of metal cables. In particular, some of these monitoring devices are based upon permanent magnets, which induce a magnetic-induction flux B, also referred to briefly as "magnetic flux", in the cables themselves. In this way, it is possible to detect the presence of faults in the cable (for example, a broken wire on the surface of or inside the cable) by studying the magnetic flux variations. More in particular, these devices are based upon setting-up of a magnetic circuit, i.e., a closed path for the magnetic flux, which comprises the cable to be monitored and which is consequently affected by cracks or incisions in the cable itself, so that the magnetic characteristics of the magnetic circuit are indicative of the state of the cable. In even greater detail, generally these devices comprise magnetic-field sensors of two different types: sensors adapted to measure the losses of magnetic flux due to local faults (LFs) in the cable, which are generally located in the proximity of the path set up for the magnetic flux, or sensors adapted to measure variations of magnetic flux due to losses of metallic area (LMA) in the cable, the latter sensors being generally located along the path set up for the magnetic flux.

Monitoring devices of known type have certain drawbacks. In particular, the difficulty in controlling precisely the dispersed magnetic fluxes, and the relativity of the position of the sensors with respect to the position of the faults in the cable section reduce the precision and reliability of monitoring of said faults.

A further drawback is linked to the encumbrance of said devices, as well as to the need to provide an adequate power supply, mainly in the case, which is not infrequent in literature, of devices in which the magnetic field is not generated by permanent magnets, but rather by current windings. These drawbacks explain why frequently the devices known in literature are conceived for the monitoring of a single cable and are, consequently, unsuitable for the monitoring of modern multicable systems, the latter being characterized by the presence of a bunch of cables of limited diameter, instead of a single cable with large diameter.

The object of the present invention is to provide a device capable of overcoming at least in part the drawbacks of the prior art.

According to the present invention there is provided a device for monitoring cables as defined in the annexed claims.

Further characteristics and advantages of the present invention will be clear from the detailed description which follows, provided purely by way of non-limiting example, with reference to the attached drawings, in which:
- Figures 1a and 1b show a monitoring device for multicable systems, respectively in a closed and in an open position, according to a first embodiment;
- Figure 2 shows an exploded view of the monitoring device shown in Figures 1a and 1b;
- Figure 3 schematically shows an arrangement of sensors within the monitoring device shown in Figures 1a, 1b and 2;
- Figure 4 shows an equivalent magnetic circuit scheme for the monitoring device shown in Figures 1a, 1b, and 2;
- Figure 5a and 5b show, respectively, a detail of a cable with a fault, and the arrangement of sensors around said cable;
- Figure 6a shows the trend of the magnetic induction B, expressed in Tesla, along an axis X orthogonal to the axis of the cables;
- Figure 6b shows the trend of the magnetic field H, expressed in ampere/metre, along an axis X orthogonal to the axis of the cables;
- Figure 6c shows the profile of the relative magnetic permeability µᵣ along the same axis as those of Figures 6a and 6b;
- Figure 6d shows the profile of the radial component B_{z} of the magnetic induction B, expressed in Tesla, along an axis Y parallel to the cables;
- Figure 7 shows a block diagram of a processing circuit within the monitoring device shown in Figures 1a, 1b, and 2;
- Figure 8 shows a block diagram of a supply circuit within the monitoring device illustrated in Figures 1a, 1b, and 2; and
- Figure 9 schematically shows a second embodiment of a monitoring device for multicable systems.

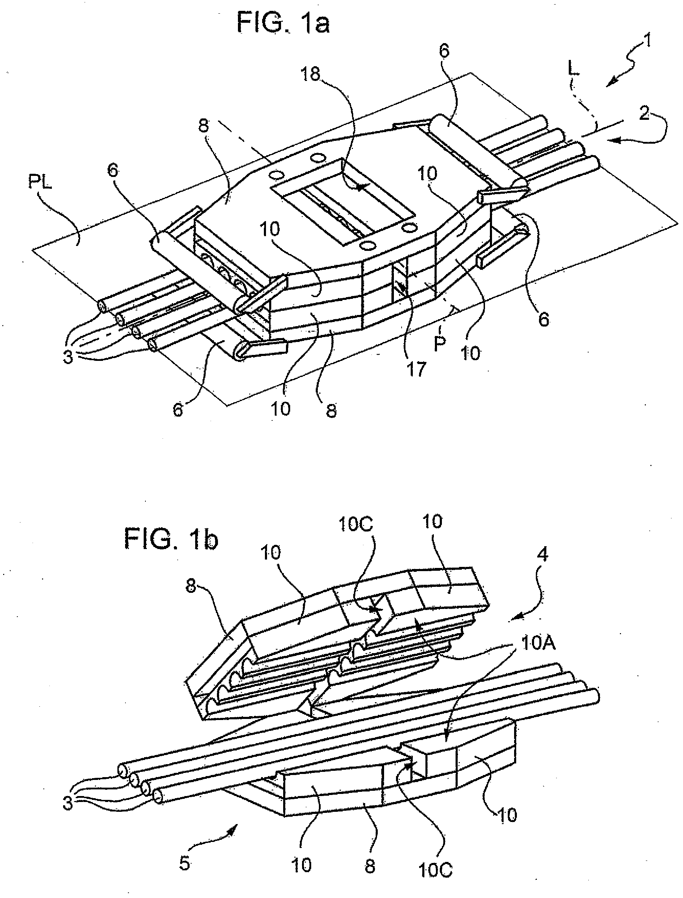

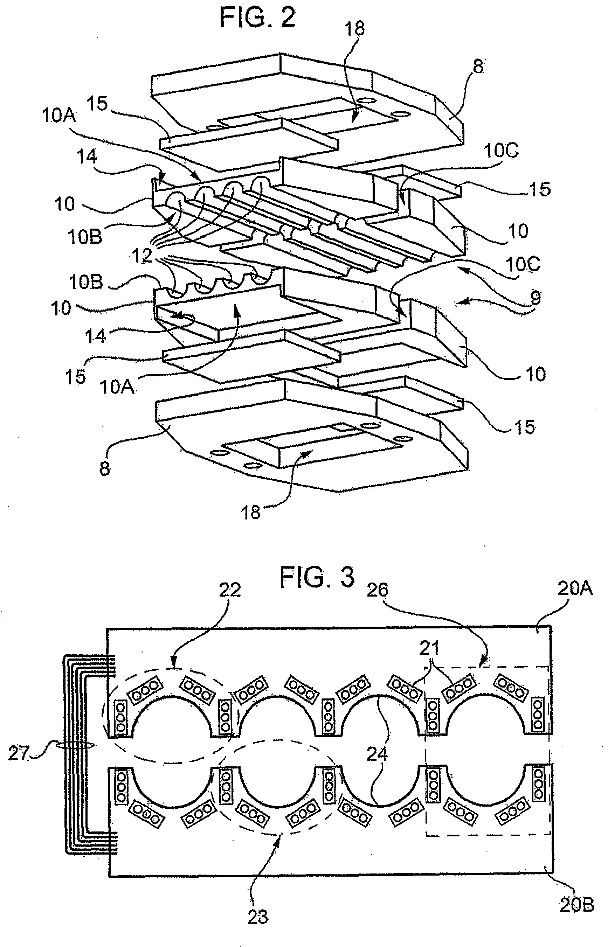

Figures 1a, 1b, and 2 show a monitoring device 1 for a multicable system, and a bunch 2 of cables 3 undergoing measurement, for example, comprising a number of cables equal to four. Generally, in a way by itself known and not shown, the multicable system forms part of a lifting system, for example for lifting the cabin of an elevator, or a driving system, for example, for driving a cableway-car. The system comprises a motor assembly and a pulley coupled thereto, adapted to move the bunch 2 of cables 3. In a way not shown, the monitoring device 1 is preferably coupled to the pulley by means of suitable coupling elements with which it is provided.

Assuming as reference the plane defined by the bunch 2, i.e., the longitudinal plane PL in which the cables 3 lie, and as longitudinal axis L the direction parallel to the bunch 2 itself and passing through the centre of gravity of the monitoring device 1, the monitoring device 1 comprises a top shell 4 and a bottom shell 5, facing each other on opposite sides with respect to the longitudinal plane PL, and adapted to be engaged in a releasable way to the cables, in such a way that the cables 3 to be monitored can run in a portion of space comprised between the top shell 4 and the bottom shell 5. In particular, the running of the cables 3 is facilitated by the presence of rollers 6 connected to the top shell 4 and the bottom shell 5 of the monitoring device 1.

The top shell 4 and the bottom shell 5 are joined by a hinge (not shown in Figures 1a and 1b) set in a direction substantially parallel with respect to the longitudinal axis L; in addition, the top shell 4 closes on the bottom shell 5 by means of an appropriate closing assembly (not shown in Figures 1a and 1b), which enables to keep the monitoring device 1 closed during the monitoring operations.

Each of the top shell 4 and bottom shell 5 comprise an external metal structure 8, made of ferromagnetic material, and a housing structure 9, having a mechanical supporting function, which are set on top of one another. In the embodiment illustrated in Figures 1a, 1b, and 2, the housing structure 9 of each of the top shell 4 and bottom shell 5 is constituted by a pair of housing elements 10. The housing elements 10, for example made of plastic material or other nonmagnetic material, are the same as one another, and, when the monitoring device 1 is closed in a monitoring condition, are set specularly with respect to a perpendicular axis P, orthogonal to the longitudinal axis L.

Each housing element 10 has: a top face 10a and a bottom face 10b, which, when the monitoring device 1 is closed, are set substantially parallel to the longitudinal plane PL, the top face 10a being, of the two faces considered, the one that is farther from the longitudinal plane PL; and moreover an internal lateral face 10c, which, again when the monitoring device 1 is closed, is perpendicular to the longitudinal axis L.

In greater detail, each housing element 10 is shaped so as to define, on its own bottom face 10b, a plurality of recesses 12, of a substantially semicylindrical shape, facing the longitudinal plane PL. In a closed position of the monitoring device 1, the recesses 12 of the top shell 4 define, with corresponding recesses 12 of the bottom shell 5, cylindrical channels in which the cables 3 to be monitored can run.

On the top face 10a of each housing element 10 there is defined a seat 14 facing the corresponding external metallic structure 8. In each of said seats 14 there is housed a permanent magnet 15.

In addition, in a closed position of the monitoring device 1, the housing elements 10 of the top shell 4 and bottom shell 5 are arranged so as to define a compartment 17, partially occupied by the cables 3 and delimited at the sides by the internal lateral faces 10c of the housing elements 10.

Each of the external metal structures 8 has a through cavity 18, which is set centrally and in correspondence with the compartment 17 having, for example, the shape of a parallelepiped, even though other geometries are equally possible. The presence of the through cavity 18 makes the surface of the external metal structures not simply connected.

The monitoring device 1 further comprises a first and a second electronic printed circuit 20a, 20b (shown in Figure 3), housed, in use, within the compartment 17, and set on opposite sides with respect to the longitudinal plane PL, to which they are basically perpendicular. As is shown schematically in Figure 3, on the electronic printed circuits 20a, 20b there are set Hall-effect sensors 21, arranged to form top half-crowns 22 and bottom half-crowns 23, respectively, on the first and second electronic printed circuits 20a, 20b, set in such a way as to form a first linear array and a second linear array of half-crowns of sensors.

Each of the electronic printed circuits 20a, 20b has a plurality of notches 24 of semicircular shape (in particular, in a number equal to the number of recesses 12 and cables 3 to be monitored), around which there are located corresponding top half-crowns 22 or bottom half-crowns 23 of Hall-effect sensors 21. When the monitoring device 1 is closed, the corresponding notches 24 of the first and the second electronic printed circuits 20a, 20b define seats through which respective cables 3 run. In addition, top half-crowns 22 and bottom half-crowns 23 form respective crowns 26 of Hall-effect sensors 21; in this way, each cable 3 passes through a corresponding crown 26. Top half-crowns 22 and bottom half-crowns 23 forming part of a same crown 26 are electrically connected by means of electrical wires 27, comprising amongst other things a supply line and a ground line.

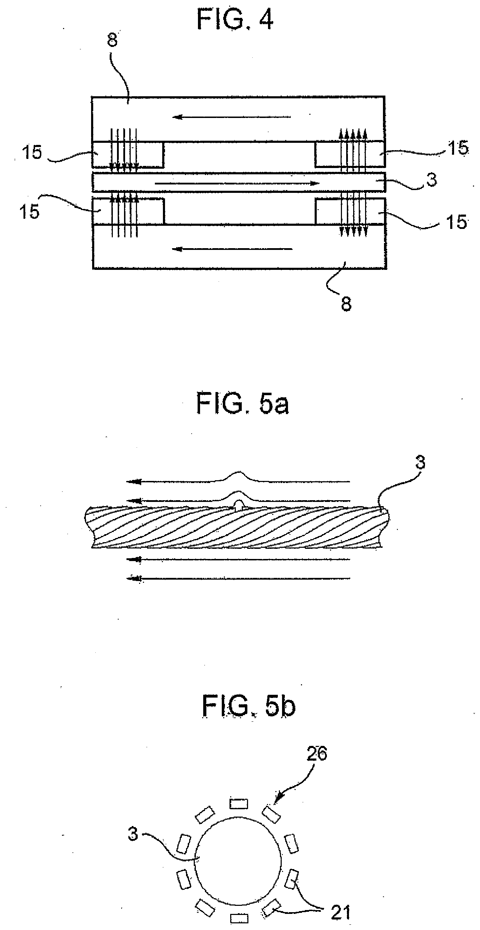

The number and arrangement of the Hall-effect sensors 21 within each crown 26 are such that the angular distance between a potential fault in any point of the section of a cable 3 and the Hall-effect sensor 21 closest to the fault itself is always such as to guarantee an effective detection of the fault. In particular, it has been found that the Hall-effect sensors 21 are able to detect in an optimal way a potential fault in the cable 3 only if the fault is at an angular distance not greater than 90° from the sensor itself; consequently, the number of Hall-effect sensors 21 forming each crown 26 is not less than four. For example, as shown in Figure 3, each crown 26 comprise a number of Hall-effect sensors 21 equal to eight; alternatively, as shown in the next Figure 5b, each crown 26 comprises a number of Hall-effect sensors 21 equal to ten, angularly evenly spaced along the profile of the crown 26.

The principle of operation of the monitoring device 1 described is based on the fact that, leaving the housing structure 9 apart, the function of which is purely mechanical and for the limitation of the vibrations, and considering for simplicity the case of a single cable 3, the permanent magnets 15, the external metallic structures 8 and the cable 3 to be monitored define a magnetic circuit, as represented in Figure 4. The magnetic flux created by the permanent magnets 15 is canalized inside the cable 3, bringing it into well-defined magnetic working conditions, in particular in a condition of magnetic saturation. The magnetic flux closes through the external metal structures 8, which have magnetic and geometrical characteristics such as to guarantee the confinement of the magnetic flux within the cable 3 to be monitored, thus reducing the dispersed magnetic flux.

The presence of the through cavity 18 allows optimizing the path of the magnetic fluxes, i.e., the closing of the magnetic circuits corresponding to the cables 3 to be monitored, and in particular: optimizing of the confinement of the magnetic flux within the cables 3, bringing them to the maximum saturation induction; and reducing the magnetic flux dispersed in the proximity of the Hall-effect sensors 21, in the absence of faults in the cables 3.

As is shown schematically in Figure 5a, in the case where a cable 3 has a fault, the magnetic flux is altered by the presence of the fault itself. This alteration of the magnetic flux is detected by one or more Hall-effect sensors 21, which form part of the crown 26 corresponding to the cable 3 being measured. In particular, in correspondence with a fault, the Hall-effect sensors 21, which are configured in such a way as to detect the radial component B_{z} of the dispersed magnetic field, generate a detection signal, whose analysis enables to trace back the presence of the fault.

In order for the performance of the device to be optimal, it is convenient, in the absence of faults along the cables 3, that the dispersed magnetic fluxes are minimal. In fact, the reduction of the dispersed magnetic fluxes enables to obtain a greater magnetic saturation of the cables 3, and hence to obtain detection signals sufficiently ample even in the case of faults within the cables 3. In addition, the reduction of the dispersed magnetic fluxes makes the magnetic field close to the Hall-effect sensors 21 practically zero (in the absence of faults), with consequent reduction of the jams due, for example, to oscillations of the cables 3, enabling to increase the sensitivity of the monitoring device 1.

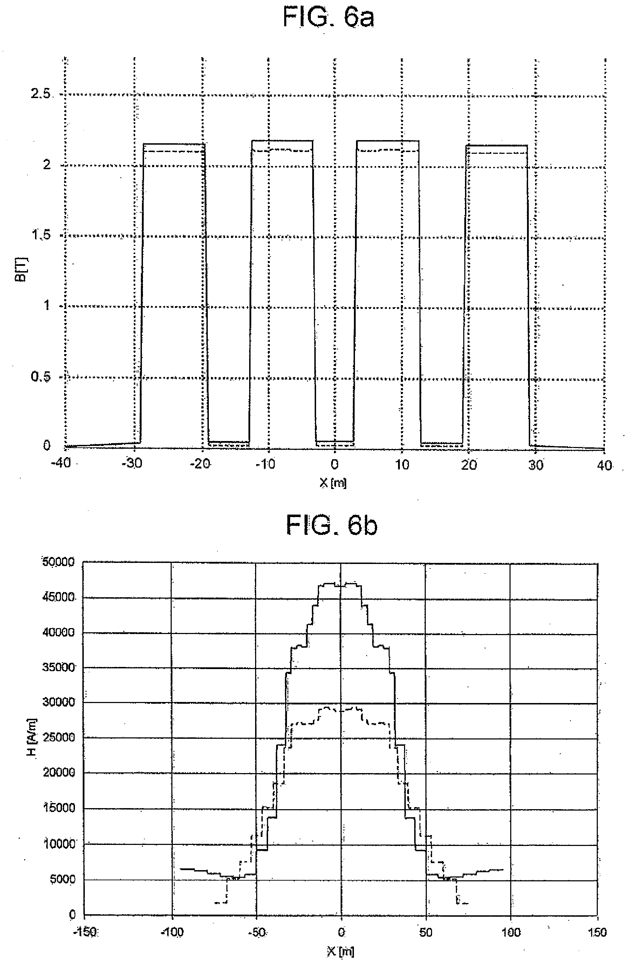

The advantages provided by the particular configuration of the external metal structures 8 are highlighted by the graphs shown in Figures 6a-6d, which illustrate a comparison between the magnetic characteristics of the monitoring device 1 according to the present invention (represented with a solid line) and the magnetic characteristics of a monitoring device having external metal structures without through cavities (represented with a dashed line).

In particular, Figures 6a and 6b show, respectively, the magnitude of the magnetic induction B and the magnitude of the magnetic field along an axis orthogonal to the longitudinal axis L and belonging to the longitudinal plane PL in which the cables 3 lie, highlighting an increase of the magnetic induction B and of the magnetic field in correspondence with the cables 3 and in the presence of the external metallic structures 8 provided with through cavities 18.

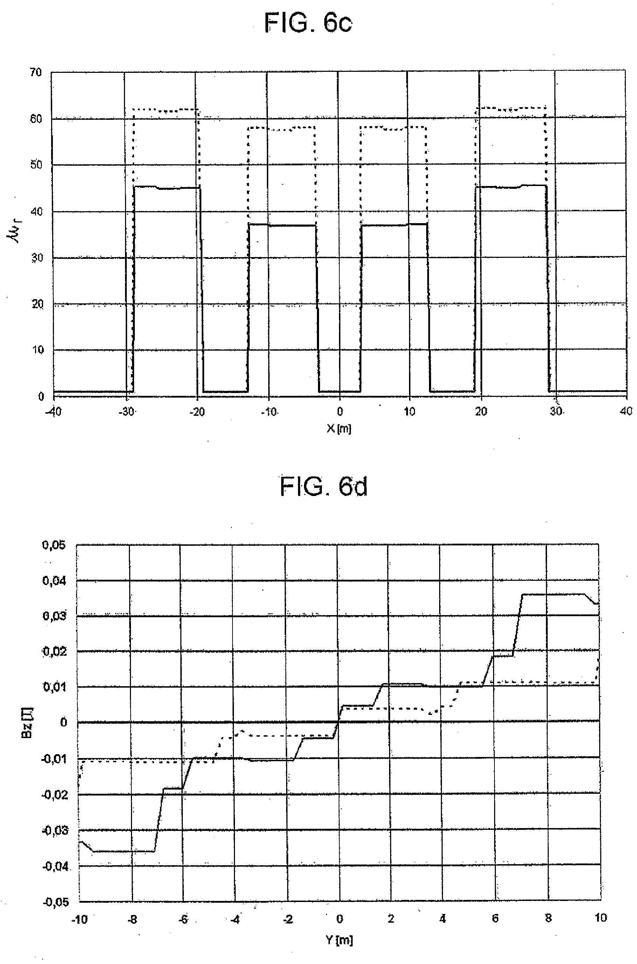

Figure 6c shows the trend of the relative magnetic permeability µᵣ along the aforesaid orthogonal axis, highlighting a greater magnetic saturation of the cables 3 in the structure according to the invention.

Figure 6d shows the trend of the radial component B_{z} of the magnetic induction B along a portion of the longitudinal axis L comprised between the permanent magnets 15, highlighting a reduction of said component due to the dispersed fluxes in the absence of faults of the cables 3. The reduction of the radial component B_{z}, detected by the Hall-effect sensors 21, enables a better signal-to-noise ratio to be obtained in the detection of the faults, in the presence of jams.

In addition, the monitoring device 1 described enables monitoring multicable systems, detecting the faults of the individual cables 3 in a selective way: each cable 3 is analysed independently of the others, thus avoiding any uncertainty in localizing of the faults, by means of analysis of the detection signals produced by the Hall-effect sensors 21 of the respective crown 26. In particular, said detection signals are appropriately integrated in such a way as to generate a single output signal of the crown 26, commonly known as localized-fault signal (or more briefly, LF signal). The potential fault in a faulty cable 3 is detected preferentially by the corresponding crown 26, generating at the output from said crown 26 an LF signal of greater amplitude with respect to the LF signals generated at the output by the other crowns 26.

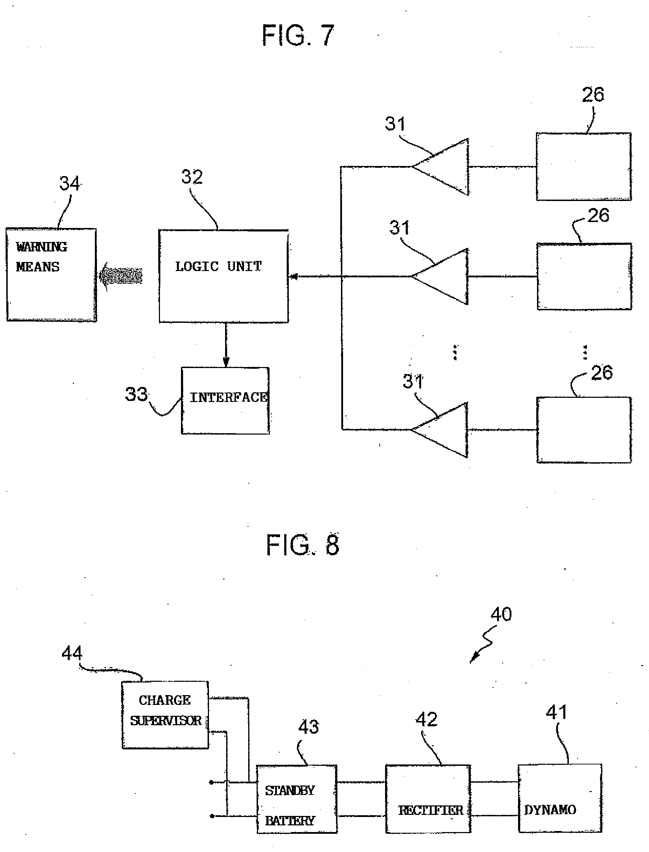

With reference to Figure 7, there is now described in greater detail a processing circuit, designated by 30, of the monitoring device 1, which is adapted to receive and process the output LF signals from the crowns 26. Preferably, the acquisition circuit 30 is integrated in electronic printed circuits 20a, 20b. In particular, Figure 7 refers to the case of a monitoring device 1 capable of monitoring a number n of cables 3, hence provided with n crowns 26 of Hall-effect sensors 21.

The processing circuit 30 comprises: n conditioning stages 31, which are connected to corresponding crowns 26; a logic unit 32, in the case in point a microcontroller (or else a DSP), having at input a multichannel A/D converter (not shown in Figure 7) and receiving at input the outputs of the conditioning stages 31; a serial interface 33, connected to the output of the logic unit 32; and warning means 34, which are also connected to the output of the logic unit 32 and are adapted to issue warning signals (light signals, acoustic signals, etc.).

The conditioning stages 31 adapt the LF signals coming from the crowns 26 in such a way that these will meet the requirements needed at input of the logic unit 32. In turn, the logic unit 32 sends the signals, appropriately processed, to the serial interface 33 and/or to the warning means 34. The signals processed by the logic unit 32 and sent to the serial interface 33 can be further processed by an external computer (not shown in Figure 7), after prior connection of the serial interface 33 with an external interfacing bus.

In particular, the logic unit 32 is configured for detecting the overstepping, by the LF signals produced by the crowns 26, of a given threshold value, which can be set from outside the monitoring device 1 and is stored in the logic unit 32 itself, or else in an associated memory (not shown in Figure 7).

From a practical standpoint, the monitoring device 1 can supply an output signal corresponding to the state of the cables 3 in different forms. In particular, the output signal can consist of a light signal, for example the lighting of a LED by warning means 34, to indicate a fault in a given cable 3.

Alternatively, the output signal can consist of the complete traces produced by the crowns 26, i.e., of the LF signals produced by the crowns 26 during the entire monitoring. These traces must be analysed with the aid of an external processor, which is connected to the monitoring device 1 by means of connection to the serial interface 33.

Finally, the output signal can consist of alarm and diagnostic signals, which can be transmitted to a control centre external to the monitoring device 1, for example by means of a wireless network, or else by exploiting possible pre-existing alarm connections, which connect the multicable system to be monitored to the external control centre. In the case of connection to an external control centre by means of a wireless network, the warning means 34 comprise a wireless transmitter.

From the electrical standpoint, the supply of the monitoring device 1 can be derived from the supply of the motor assembly forming part of the lifting or driving system, the cables 3 of which are undergoing monitoring.

Alternatively, a particular embodiment of the present invention, shown in Figure 8, envisages that the monitoring device 1 will be provided with a supply system 40 of the dynamo-standby battery.

The supply system 40 comprises: a dynamo 41, operatively coupled to the rollers 6; a rectifier 42, connected to the output of the dynamo 41; a standby battery 43, connected to the output of the rectifier 42; and a charge supervisor 44, connected to the output of the standby battery 43. On the output of the standby battery 43, i.e., on its electrical output terminals, it is possible to get the electrical supply necessary for the operation of the monitoring device 1.

When the monitoring device 1 is used for monitoring the cables 3, and hence when the cables 3 run through the rollers 6, the dynamo 41 is driven, thereby generating energy. The rectifier 42 operates in such a way that the energy produced by the dynamo 41 and due to running of the cables will reach the standby battery 43 always with the same polarity, so as to guarantee the charge thereof. When the charge of the standby battery 43 is not sufficient to enable operation of the monitoring device 1, the charge supervisor 44 turns off the monitoring device 1, to which it is connected (detail not shown in Figure 8), and sends a diagnostic signal.

The advantages that can be obtained with the monitoring devices described emerge clearly from the foregoing description.

In particular, the arrangement of the Hall-effect sensors 21 enables detecting the presence of faults with a better sensitivity as compared to what is enabled by the prior art because the sensitivity to the faults is basically independent of the position of the faults themselves on the section of the cable 3.

In addition, the geometry of the external metal structures 8 enables increasing the confinement of the magnetic flux within the cables 3, bringing them into a condition of higher magnetic saturation, and reducing the dispersed magnetic fluxes, further increasing the sensitivity of the monitoring device 1, thereby obtaining a better signal-to-noise ratio.

The possibility of sending an output signal for the identification of a fault, or else of communicating with an external computer, means that the monitoring device 1 finds advantageous use as a portable device for checking multicable systems, capable of functioning both as a stand-alone device and as a measuring device to be interfaced with an external computer. Alternatively, the possibility of sending output signals to a control centre entails that the monitoring device 1 can find advantageous application also as device for permanent monitoring of multicable systems; even in this case, the monitoring device 1 enables, once a fault has been detected and thanks to the possibility of connecting to an external computer, performing a more accurate analysis of the position of the fault along the cables 3.

In addition, the supply system 40, integrated with the monitoring device 1, eliminates the need to perform specific electrical wirings for providing supply to the monitoring device 1 itself, simplifying the operations of installation and maintenance of the device on pre-existing systems.

Of course, without prejudice to the principle of the invention, the embodiments and details of construction may vary with respect to what is described purely by way of non-limiting example herein, without thereby departing from the scope of the present invention, as defined in the annexed claims.

The number of Hall-effect sensors 21 for each crown 26 can vary according, for example, to the diameter of the cables 3 to be monitored. In addition, there may be envisaged the use of magnetic-field sensors different from Hall-effect sensors, such as, for example, magnetometers, fluxgates, etc.

The shape, number, and material of the housing structures 9 can vary according, for example, to the number and diameter of the cables 3 to be monitored, as well as to the needs of control of movement of the cables 3 themselves.

According to a further embodiment of the present invention, an optical sensor (or a resolver) can be associated to the dynamo 41, for measuring the length of the stretch of cable 3 effectively passed through the device 1 so as to allow an exact location of the faults. The same result can be obtained in the case in which the rollers 6 act as tachometric wheel.

In addition, it is pointed out that, even though the simultaneous presence of the particular arrangement of the Hall-effect sensors 21 described and of the through cavity 18 in the external metallic structure 8 proves particularly advantageous for the reasons set forth above, said solutions could be implemented in a way independent of one another.

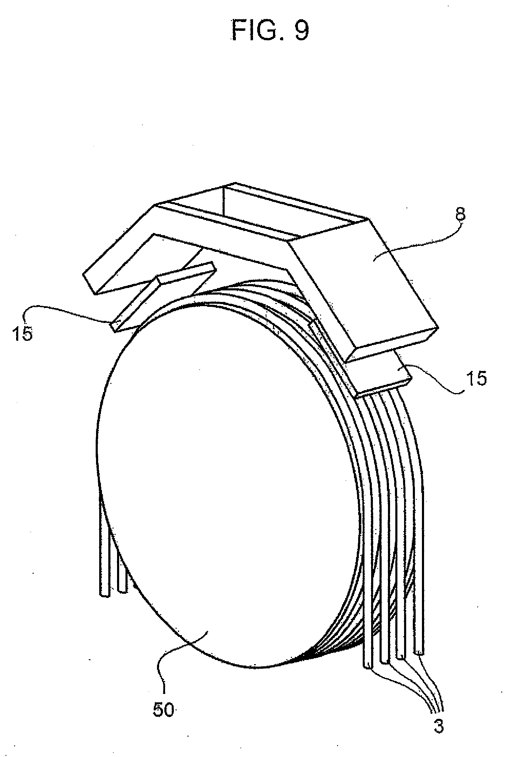

According to a further embodiment of the present invention (shown schematically in Figure 9), the monitoring device 1 comprises a single shell, in particular the top shell 4, and is configured in such a way as to enable its location in contact with the cables 3 directly in correspondence with a pulley 50 associated to the multicable system. In this particular embodiment, the geometrical shapes of the external metal structure 8, of the housing structure 9, and hence also of the housing elements 10 (not shown herein), are such as to enable a mechanical fit with part of the external circular profile of the pulley 50 in which the cables 3 to be monitored run, in this configuration said pulley being made of non magnetic material in order to prevent the magnetic flux from flowing in the pulley itself.

The Hall-effect sensors 21 are arranged in such a way as to form a single array of half-crowns, in particular top half-crowns 22. Also in this case, the Hall-effect sensors 21 of each top half-crowns 22 are arranged in such a way that a possible fault in the corresponding cable 3 is at an angular distance from the closest sensor not greater than 90°.

Advantageously, this embodiment enables monitoring of the cables 3 in an area with high mechanical tensile stress, with the consequence of facilitating monitoring in the case in which one or more strands, of one or more cables 3, are cut and come out of the section of the corresponding cable. Given that the monitoring area has a high mechanical tensile stress, the potential cut strands tend not to move away from the corresponding cable 3. In addition, said solution introduces fewer mechanical critical issues on damaged cables.

## Claims

1. A monitoring device (1) for the monitoring of a multicable system provided with a plurality of cables (3) made of magnetic-conductive material, comprising:
- housing means (4, 5) configured in such a way as to house said cables (3) during a monitoring operation;
- magnetic means (8, 15) carried by said housing means (4, 5) and configured for generating a plurality of magnetic fluxes and a corresponding plurality of magnetic circuits, each of said magnetic circuits comprising a cable (3) of said plurality of cables; and
- an array of magnetic sensors (21) configured in a crown arrangement through which the cable passes during a monitoring operation so as to detect dispersions of said magnetic fluxes around said cables (3), which indicate the presence of faults of said cables,
said housing means comprising a first and a second housing structure made of plastic or another nonmagnetic material wherein these structures comprise recesses of a substantially semicylindrical shape which together form cylindrical channels in which the cables to be monitored can run,
each housing structure (9) being constituted by a pair of housing elements (10), defining inbetween a compartment (17), wherein said compartment houses the array of magnetic sensors (21),
said magnetic means (4,5) comprising a first and a second external metal structure made of ferromagnetic material, the first and second external metal structures being carried by the first and second housing structures respectively,
each external metal structures (8) having a through cavity (18), which is set centrally and above said compartment (17) partially occupied by said cables (3) and designed to house said array of magnetic sensors (21), wherein said through cavity (18) is configured in order to optimize the path of the magnetic fluxes and the confinement of the magnetic fluxes within the cables (3) bringing the cables (3) in a position of greater magnetic saturation, reducing the magnetic flux dispersed in the proximity of the magnetic sensors (21) in the absence of faults in the cables,
wherein
- said magnetic sensors (21) are Hall-effect sensors (21), and
- said array of Hall-effect sensors (21) is configured in such a way as to monitor said cables (3) in a selective way to generate a local-fault (LF) signal for each of said cables (3).

2. The device according to Claim 1, wherein said array comprises a plurality of sets (26) of Hall-effect sensors (21), each of said sets (26) comprising Hall-effect sensors (21) arranged, with respect to a corresponding cable (3), in such a way that an angular distance between a possible fault in said corresponding cable (3) and at least one of said magnetic sensors (21) is not greater than 90°.

3. The device according to Claim 1 or Claim 2, wherein said array comprises a plurality of sets (26) of Hall-effect sensors (21), each of said sets (26) being constituted of a crown (26) of Hall-effect sensors (21) arranged around a corresponding cable (3); said corresponding cable (3) passing through said crown (26).

4. The device according to Claim 3, wherein said crown (26) comprises a number of said Hall-effect sensors (21) of not less than four.

5. The device according to Claim 3 or Claim 4, wherein said crown (26) is made up of a first half-crown (22) and a second half-crown (23) of magnetic sensors (21), said first (22) and second half-crowns (23) being arranged in such a way as to form a first and a second linear array of half-crowns of Hall-effect sensors (21); each of said first half-crowns (22) being coupled to a respective one of said second half-crowns (23) to form said crown (26) during said monitoring operation, in such a way that said corresponding cable (3) passes through said crown (26).

6. The device according to any one of the preceding claims, wherein said magnetic means (8, 15) comprise said external metal structure (8) made of ferromagnetic material and magnets (15) configured in such a way as to enable the closure of said magnetic circuits through said external metal structure (8); said external metal structure (8) comprising at least one hollow portion (18) so that the surface of said external metal structure (8) is not simply connected.

7. The device according to Claim 6, wherein said magnets (15) are set on opposite sides with respect of said hollow portion (18) along a longitudinal axis of said external metal structure (8).

8. The device according to any one of the preceding claims, wherein said housing means (4, 5) are configured in such a way as to be engaged in a releasable way to said cables (3), and comprise said first (9) and a second housing structure (9), which are connected by hinge means, each of said housing structures (9) having, on a first face (10b) of its own, a plurality of recesses (12); during said monitoring operation, said housing means (4, 5) being closed on said cables (3) and said recesses (12) defining channels in which said cables (3) run.

9. The device according to Claim 8, wherein said first and second housing structures (9) are configured in such a way as to define, during said monitoring operation, a compartment (17) designed to house said array of Hall-effect sensors (21).

10. The device according to Claim 8 or Claim 9, wherein each of said first and second housing structures (9) has, on a second face (10a) of its own, a pair of seats (14), which are adapted to house respective magnets (15); and wherein said housing means (4, 5) comprise an external metal structure (8) and set on top of said second face (10a).

11. The device according to any one of the preceding claims, wherein, during said monitoring operation, said cables (3) run within said housing means (4, 5); said monitoring device (1) further comprising roller means (6) configured for favouring running of said cables (3).

12. The device according to Claim 11, comprising a supply system (40) configured for autonomously generating electrical energy starting from the running motion of said cables (3); said supply system (40) comprising a dynamo (41), operatively coupled to said roller means (6).

13. The device according to Claim 12, comprising means for determining the length of the stretches of said cables (3) that have run through said housing means (4, 5); said means for determining the length comprising an optical sensor operatively coupled to said dynamo (41).

14. The device according to Claim 12, comprising means for determining the length of the stretches of said cables (3) that have run through said housing means (4, 5); said means for determining the length comprising a tachometric wheel operatively coupled to said roller means (6).

15. The device according to any one of the preceding claims, wherein said array comprises a plurality of sets (26) of said Hall-effect sensors (21); and said monitoring device (1) further comprises an electronic processing circuit (30), provided with: a plurality of conditioning stages (31), each connected to a respective one of said sets (26); a processing unit (32), connected to said conditioning stages (31); and warning means (34), connected to said processing unit (32).

16. The device according to Claim 15, wherein said processing unit (32) is configured for sending an alarm signal via said warning means (34) when at least one of said local-fault signals has a given relationship with a threshold value.

17. The device according to Claim 15 or Claim 16, wherein said electronic processing circuit (30) further comprises a wireless transmitter, and said processing unit (32) is configured for transmitting monitoring signals, relative to said monitoring operation, to an external control centre by means of said wireless transmitter.

18. The device according to any one of the preceding claims, wherein said housing means (4, 5) are configured so as to be coupled with a pulley of said multicable system.

## Patentansprüche

1. Überwachungseinrichtung (1) zum Überwachen eines Mehrkabelsystems, das mit einer Vielzahl von Kabeln (3) vorgesehen ist, die aus einem magnetisch-leitfähigen Material hergestellt sind, die aufweist:
- Gehäusemittel (4, 5), die dergestalt ausgestaltet sind, um Kabel (3) während eines Überwachungsvorgangs aufzunehmen;
- Magnetmittel (8, 15), die von den Gehäusemitteln (4, 5) gehalten werden und dazu ausgestaltet sind, eine Vielzahl von magnetischen Flüssen und eine entsprechende Vielzahl von magnetischen Kreisen zu erzeugen, wobei ein jeder der magnetischen Kreise ein Kabel (3) der Vielzahl von Kabeln aufweist; und
- eine Reihe von Magnetsensoren (21), die in einer Kronenanordnung ausgestaltet sind, durch die das Kabel während eines Überwachungsvorgangs verläuft, um so Streuung der magnetischen Flüsse um die Kabel (3) zu erfassen, die das Vorhandensein von Fehlern bei den Kabeln angeben,
wobei das Gehäusemittel eine erste und eine zweite Gehäuseanordnung aufweist, die aus Plastik oder einem anderen nicht-magnetischen Material hergestellt ist, wobei diese Anordnungen Aussparungen in einer im Wesentlichen halbzylindrischen Form aufweisen, die zusammen zylindrische Kanäle bilden, in denen die zu überwachenden Kabel geführt werden können,
wobei eine jede Gehäusestruktur (9) durch ein Paar von Gehäuseelementen (10) gebildet wird, die dazwischen ein Abteil (17) bilden, wobei das Abteil die Reihe der Magnetsensoren (21) aufnimmt,
wobei die Magnetmittel (4, 5) eine erste und zweite externe Metallanordnung aufweisen, die aus ferromagnetischem Material hergestellt ist, wobei die erste und zweite externe Metallanordnung jeweils durch die erste und zweite Gehäuseanordnung gehalten werden,
wobei jede externe Metallanordnung (8) einen durchgehenden Hohlraum (18) hat, der in der Mitte und über dem Abteil (17) angeordnet ist, das teilweise von den Kabeln (3) belegt ist und dazu ausgelegt ist, die Reihe der Magnetsensoren (21) aufzunehmen, wobei der durchgehende Hohlraum (18) dazu ausgestaltet ist, den Pfad der magnetischen Flüsse und die Begrenzung der magnetischen Flüsse in den Kabeln (3) zu optimieren, wobei die Kabel (3) in eine Position einer höheren magnetischen Sättigung gebracht werden, den magnetischen Fluss, der in der Nähe der Magnetsensoren (21) gestreut ist, zu reduzieren, wenn keine Fehler in den Kabeln vorliegen,
wobei
- die Magnetsensoren (21) Hall-Effekt-Sensoren (21) sind, und
- die Reihe der Hall-Effekt-Sensoren (21) dergestalt ausgestaltet ist, dass die Kabel (3) selektiv überwacht werden, um ein lokales Fehler (LF) Signal für ein jedes der Kabel (3) zu erzeugen.

2. Vorrichtung nach Anspruch 1, wobei die Reihe eine Vielzahl von Sätzen (26) an Hall-Effekt-Sensoren (21) aufweist, wobei ein jeder der Sätze (26) Hall-Effekt-Sensoren (21) aufweist, die bezüglich eines entsprechenden Kabels (3) dergestalt angeordnet ist, dass ein Winkelabstand zwischen einem möglichen Fehler in dem zugehörigen Kabel (3) und wenigstens einem der Magnetsensoren (21) nicht größer als 90° ist.

3. Vorrichtung nach Anspruch 1 oder Anspruch 2, wobei die Reihe eine Vielzahl von Sätzen (26) an Hall-Effekt-Sensoren (21) aufweist, wobei ein jeder der Sätze (26) aus einer Krone (26) von Hall-Effekt-Sensoren (21) gebildet ist, die um ein zugehöriges Kabel (3) angeordnet sind; wobei das zugehörige Kabel (3) durch die Krone (26) verläuft.

4. Vorrichtung nach Anspruch 3, wobei die Krone (26) eine Anzahl von nicht weniger als vier der Hall-Effekt-Sensoren (21) aufweist.

5. Vorrichtung nach Anspruch 3 oder Anspruch 4, wobei die Krone (26) aus einer ersten Halbkrone (22) und einer zweiten Halbkrone (23) von Magnetsensoren (21) hergestellt ist, wobei die erste (22) und die zweite Halbkrone (23) so angeordnet sind, dass sie eine erste und eine zweite lineare Reihe von Halbkronen der Hall-Effekt-Sensoren (21) bilden; wobei eine jede von den ersten Halbkronen (22) mit einer jeweiligen von den zweiten Halbkronen (23) verbunden ist, um die Krone (26) während des Überwachungsvorgangs dergestalt zu bilden, dass das zugehörige Kabel (3) durch die Krone (26) verläuft.

6. Vorrichtung nach einem der vorhergehenden Ansprüche, wobei das Magnetmittel (8, 15) die externe Metallanordnung (8) aufweist, die aus ferromagnetischem Material und Magneten (15) hergestellt ist, die dergestalt ausgestaltet sind, dass das Schließen der magnetischen Kreise durch die externe Metallanordnung (8) ermöglicht wird; wobei die externe Metallanordnung (8) wenigstens einen Hohlabschnitt (18) aufweist, sodass die Oberfläche der externen Metallanordnung (8) nicht einfach verbunden ist.

7. Vorrichtung nach Anspruch 6, wobei die Magnete (15) an gegenüberliegenden Seiten bezüglich des Hohlabschnitts (18) entlang einer Längsachse der externen Metallanordnung (8) angeordnet sind.

8. Vorrichtung nach einem der vorhergehenden Ansprüche, wobei die Gehäusemittel (4, 5) dergestalt ausgestaltet sind, dass sie in lösbarer Weise mit den Kabeln (3) in Eingriff sind, und die erste (9) und eine zweite Gehäuseanordnung (9) aufweisen, die durch Gelenkmittel verbunden sind, wobei eine jede der Gehäuseanordnungen (9) an einer eigenen ersten Seite (10b) eine Vielzahl von Aussparungen (12) hat; während des Überwachungsvorgangs die Gehäusemittel (4, 5) an den Kabeln (3) geschlossen sind, und die Aussparungen (12) Kanäle definieren, in denen die Kabel (3) verlaufen.

9. Vorrichtung nach Anspruch 8, wobei die erste und zweite Gehäusestruktur (9) dergestalt ausgestaltet sind, dass sie während des Überwachungsvorgangs ein Abteil (17) definieren, das zur Aufnahme der Reihe der Hall-Effekt-Sensoren (21) ausgebildet ist.

10. Vorrichtung nach Anspruch 8 oder Anspruch 9, wobei eine jede von der ersten und zweiten Gehäuseanordnung (9) an einer eigenen zweiten Seite (10a) ein Paar von Aufnahmen (14) hat, die dazu ausgebildet sind, die jeweiligen Magnete (15) aufzunehmen; und wobei die Gehäusemittel (4, 5) eine externe Metallanordnung (8) aufweisen und auf der zweiten Seite (10a) angeordnet sind.

11. Vorrichtung nach einem der vorhergehenden Ansprüche, wobei während des Überwachungsvorgangs die Kabel (3) in den Gehäusemitteln (4, 5) verlaufen; die Überwachungseinrichtung (1) weiterhin Rollenmittel (6) aufweist, die dazu ausgestaltet sind, ein Führen der Kabel (3) zu erleichtern.

12. Vorrichtung nach Anspruch11, die ein Zuführungssystem (40) aufweist, das zur eigenständigen Erzeugung von elektrischer Energie ausgestaltet ist, beginnend ab der Verlegungsbewegung der Kabel (3); wobei das Versorgungssystem (40) einen Dynamo (41) aufweist, der betriebsfähig mit dem Rollenmittel (6) gekoppelt ist.

13. Vorrichtung nach Anspruch 12, die Mittel zum Bestimmen der Länge der Erstreckung der Kabel (3) aufweist, die durch die Gehäusemittel (4, 5) verlegt sind; wobei die Mittel zum Bestimmen der Länge einen optischen Sensor aufweisen, der betriebsfähig mit dem Dynamo (41) gekoppelt ist.

14. Vorrichtung nach Anspruch 12, die Mittel zum Bestimmen der Länge der Erstreckung der Kabel (3) aufweist, die durch der Gehäusemittel (4, 5) geführt sind; wobei die Mittel zum Bestimmen der Länge ein Tachometerrad aufweisen, das betriebsfähig mit dem Rollenmittel (6) gekoppelt ist.

15. Vorrichtung nach einem der vorhergehenden Ansprüche, wobei die Reihe eine Vielzahl von Sätzen von Hall-Effekt-Sensoren (21) aufweist; und die Überwachungseinrichtung (1) weiterhin einen elektronischen Verarbeitungsschaltkreis (30) aufweist, der vorgesehen ist mit: einer Vielzahl von Bedingungsstufen (31), wobei eine jede mit einem jeweiligen von den entsprechenden Sätzen (26) verbunden ist; eine Verarbeitungseinheit (32), die mit den Bedingungsstufen (31) verbunden ist; und Warnmittel (34), die mit der Verarbeitungseinheit (32) verbunden sind.

16. Vorrichtung nach Anspruch 15, wobei die Verarbeitungseinheit (32) dazu ausgestaltet ist, ein Alarmsignal über das Warnmittel (34) zu senden, wenn wenigstens eines der lokalen Fehlersignale eine vorbestimmte Beziehung zu einem Grenzwert hat.

17. Vorrichtung nach Anspruch 15 oder Anspruch 16, wobei der elektronische Verarbeitungsschaltkreis (30) weiterhin einen Funksender aufweist, und die Verarbeitungseinheit (32) dazu ausgestaltet ist, Überwachungssignale bezüglich des Überwachungsvorgangs an ein externes Steuerzentrum mittels des Funksenders zu übertragen.

18. Vorrichtung nach einem der vorhergehenden Ansprüche, wobei die Gehäusemittel (4, 5) dazu ausgestaltet sind, mit einer Umlenkrolle des Mehrkabelsystems gekoppelt zu werden.

## Revendications

1. Dispositif de surveillance (1) destiné à la surveillance d'un système multicâbles muni d'une pluralité de câbles (3) composés d'un matériau à conductivité magnétique, comprenant :
- une enceinte (4, 5) configurée de façon à contenir lesdits câbles (3) pendant une opération de surveillance ;
- un moyen magnétique (8, 15) porté par ladite enceinte (4, 5) et configuré pour générer une pluralité de flux magnétiques et une pluralité correspondante de circuits magnétiques, chacun desdits circuits magnétiques comprenant un câble (3) de ladite pluralité de câbles ; et
- un réseau de capteurs magnétiques (21) configuré en forme de couronne par laquelle le câble passe pendant une opération de surveillance de façon à détecter les dispersions desdits flux magnétiques autour desdits câbles (3), qui indiquent la présence de défaillances desdits câbles,
ladite enceinte comprenant une première et une seconde structures d'enceinte composées de plastique ou d'un autre matériau non-magnétique, ces structures comprenant des renfoncements de forme sensiblement semi-cylindrique qui, ensemble, forment des canaux cylindriques dans lesquels les câbles à surveiller peuvent être placés,
chaque structure d'enceinte (9) étant constituée par une paire d'éléments d'enceinte (10), définissant entre eux un compartiment (17), ledit compartiment contenant le réseau de capteurs magnétiques (21),
ledit moyen magnétique (4, 5) comprenant une première et une seconde structures métalliques externes composées d'un matériau ferromagnétique, la première et la seconde structures métalliques externes étant portées par la première et la seconde structures d'enceinte, respectivement,
chaque structure métallique externe (8) ayant une cavité traversante (18), qui est placée centralement et au-dessus dudit compartiment (17) partiellement occupé par lesdits câbles (3) et conçu pour contenir ledit réseau de capteurs magnétiques (21), dans lequel ladite cavité traversante (18) est configurée afin d'optimiser le trajet des flux magnétiques et le confinement des flux magnétiques dans les câbles (3) en amenant les câbles (3) dans une position de plus grande saturation magnétique, afin de réduire le flux magnétique dispersé à proximité des capteurs magnétiques (21) en l'absence de défaillances dans les câbles,
dans lequel
- lesdits capteurs magnétiques (21) sont des capteurs à effet Hall (21), et
- ledit réseau de capteurs à effet Hall (21) est configuré de façon à surveiller lesdits câbles (3) de manière sélective afin de générer un signal de défaillance locale (LF) pour chacun desdits câbles (3).

2. Dispositif selon la revendication 1, dans lequel ledit réseau comprend une pluralité de groupes (26) de capteurs à effet Hall (21), chacun desdits groupes (26) comprenant des capteurs à effet Hall (21) disposés, par rapport à un câble correspondant (3), de sorte qu'une distance angulaire entre une défaillance possible dans ledit câble correspondant (3) et au moins l'un desdits capteurs magnétiques (21) ne soit pas supérieure à 90°.

3. Dispositif selon la revendication 1 ou 2, dans lequel ledit réseau comprend une pluralité de groupes (26) de capteurs à effet Hall (21), chacun desdits groupes (26) étant constitué d'une couronne (26) de capteurs à effet Hall (21) disposés autour d'un câble correspondant (3) ; ledit câble correspondant (3) passant à travers ladite couronne (26).

4. Dispositif selon la revendication 3, dans lequel ladite couronne (26) comprend un nombre desdits capteurs à effet Hall (21) non inférieur à quatre.

5. Dispositif selon la revendication 3 ou 4, dans lequel ladite couronne (26) est composée d'une première demi-couronne (22) et d'une seconde demi-couronne (23) de capteurs magnétiques (21), lesdites première (22) et seconde demi-couronnes (23) étant disposées de façon à former un premier et un second réseaux linéaires de demi-couronnes de capteurs à effet Hall (21) ; chacune desdites premières demi-couronnes (22) étant reliée à l'une desdites secondes demi-couronnes (23) afin de former ladite couronne (26) pendant ladite opération de surveillance, de sorte que ledit câble correspondant (3) passe à travers ladite couronne (26).

6. Dispositif selon l'une quelconque des revendications précédentes, dans lequel ledit moyen magnétique (8, 15) comprend ladite structure métallique externe (8) composée d'un matériau ferromagnétique et des aimants (15) configurés de façon à permettre la fermeture desdits circuits magnétiques par le biais de ladite structure métallique externe (8) ; ladite structure métallique externe (8) comprenant au moins une partie creuse (18) de sorte que la surface de ladite structure métallique externe (8) ne soit pas simplement reliée.

7. Dispositif selon la revendication 6, dans lequel lesdits aimants (15) sont placés sur des côtés opposés par rapport à ladite partie creuse (18) le long d'un axe longitudinal de ladite structure métallique externe (8).

8. Dispositif selon l'une quelconque des revendications précédentes, dans lequel lesdites enceintes (4, 5) sont configurées de façon à être engagées de manière amovible avec lesdits câbles (3), et comprennent ladite première (9) et une seconde structures d'enceinte (9), qui sont reliées par une charnière, chacune desdites structures d'enceinte (9) ayant, sur une première face (10b), une pluralité de renfoncements (12) ; pendant ladite opération de surveillance, lesdits moyens d'enceinte (4, 5) étant fermés sur lesdits câbles (3) et lesdits renfoncements (12) définissant des canaux dans lesquels lesdits câbles (3) sont placés.

9. Dispositif selon la revendication 8, dans lequel lesdites première et seconde structures d'enceinte (9) sont configurées de façon à définir, pendant ladite opération de surveillance, un compartiment (17) conçu pour contenir ledit réseau de capteurs à effet Hall (21).

10. Dispositif selon la revendication 8 ou 9, dans lequel chacune desdites première et seconde structures d'enceinte (9) possède, sur une seconde face (10a), une paire de sièges (14), qui sont adaptés pour contenir des aimants respectifs (15) ; et dans lequel lesdites enceintes (4, 5) comprennent une structure métallique externe (8) et sont placées sur le dessus de ladite seconde face (10a).

11. Dispositif selon l'une quelconque des revendications précédentes, dans lequel, pendant ladite opération de surveillance, lesdits câbles (3) sont placés dans lesdites enceintes (4, 5) ; ledit dispositif de surveillance (1) comprenant en outre un galet (6) configuré pour faciliter le placement desdits câbles (3).

12. Dispositif selon la revendication 11, comprenant un système d'alimentation (40) configuré pour générer de manière autonome une énergie électrique à partir du placement desdits câbles (3) ; ledit système d'alimentation (40) comprenant une dynamo (41), reliée audit galet (6).

13. Dispositif selon la revendication 12, comprenant un moyen destiné à déterminer la longueur des étirements desdits câbles (3) qui ont été placés dans lesdites enceintes (4, 5) ; ledit moyen de détermination de la longueur comprenant un capteur optique relié à ladite dynamo (41).

14. Dispositif selon la revendication 12, comprenant un moyen destiné à déterminer la longueur des étirements desdits câbles (3) qui ont été placés dans lesdites enceintes (4, 5) ; ledit moyen destiné à déterminer la longueur comprenant une roue tachymétrique reliée audit galet (6).

15. Dispositif selon l'une quelconque des revendications précédentes, dans lequel ledit réseau comprend une pluralité de groupes (26) desdits capteurs à effet Hall (21) ; et ledit dispositif de surveillance (1) comprend en outre un circuit de traitement électronique (30), muni de : une pluralité d'étages de conditionnement (31), qui sont chacun reliés à l'un desdits groupes respectifs (26) ; une unité de traitement (32), reliée auxdits étages de conditionnement (31) ; et un moyen d'alerte (34), relié à ladite unité de traitement (32).

16. Dispositif selon la revendication 15, dans lequel ladite unité de traitement (32) est configurée pour envoyer un signal d'alarme via ledit moyen d'alerte (34) lorsqu'au moins l'un desdits signaux de défaillance locale présente une relation donnée avec une valeur de seuil.

17. Dispositif selon la revendication 15 ou 16, dans lequel ledit circuit de traitement électronique (30) comprend en outre un émetteur sans fil, et ladite unité de traitement (32) est configurée pour transmettre des signaux de surveillance, relatifs à ladite opération de surveillance, à un centre de contrôle externe à l'aide dudit émetteur sans fil.

18. Dispositif selon l'une quelconque des revendications précédentes, dans lequel lesdites enceintes (4, 5) sont configurées de façon à être reliées à une poulie dudit système multicâbles.
